**Europäisches Patentamt**

**European Patent Office**

**Office européen des brevets**

(11) Numéro de publication: **0 208 212 B1**

## FASCICULE DE BREVET EUROPEEN

(45) Date de publication du fascicule du brevet:
**28.11.90**

(21) Numéro de dépôt: **86108751.8**

(22) Date de dépôt: **26.06.86**

(51) Int. Cl.⁵: **G11B 7/00, G11B 7/125, G11C 13/04, G11B 7/09 // G11B13/04**

(54) **Mémoire optique à suivi de piste échantillonné pour support d'information prégravé.**

(30) Priorité: **28.06.85 FR 8509856**

(43) Date de publication de la demande:
**14.01.87 Bulletin 87/3**

(45) Mention de la délivrance du brevet:
**28.11.90 Bulletin 90/48**

(84) Etats contractants désignés:
**DE GB IT NL SE**

(56) Documents cités:
**EP-A- 0 083 452**
**EP-A- 0 089 274**
**EP-A- 0 097 092**
**EP-A- 0 106 673**
**FR-A- 2 080 607**
**FR-A- 2 133 588**
**GB-A- 2 016 744**
**US-A- 4 403 318**
**US-A- 4 447 722**

**PATENTS ABSTRACTS OF JAPAN,**
**vol. 6, no. 152 (P-134)[1030], 12 août 1982; &**
**JP-A-57 71 537 (MITSUBISHI DENKI K.K.) 04-05-1982**
**PATENTS ABSTRACTS OF JAPAN,**
**vol. 9, no. 2 (P-235)[1725], 8 janvier 1985; &**
**JP-A-59 152 526 (CANON K.K.) 31-08-1984**

(73) Titulaire: **THOMSON S.A., 173, bld Haussmann, F-75008 Paris(FR)**

(72) Inventeur: **Le Carvennec, François, 33 Cottage de Cernay, F-78720 Cernay La Ville(FR)**
Inventeur: **Lecomte, Daniel, 2 rue du Docteur Labbé, F-75020 Paris(FR)**
Inventeur: **Leterme, Dominique, 1 Allée Port Royal, F-91190 Gif Sur Yvette(FR)**
Inventeur: **Romeas, René, 23, rue du Hameau des Jonchettes, F-91120 Palaiseau(FR)**

(74) Mandataire: **Grynwald, Albert et al, THOMSON-CSF SCPI, F-92045 PARIS LA DEFENSE CEDEX 67(FR)**

(56) Documents cités: (suite)
**PATENTS ABSTRACTS OF JAPAN,**
**vol. 8, no. 58 (P-261)[1495], 16 mars 1984; &**
**JP-A-58 205 931 (CANON K.K.) 01-12-1983**
**PATENTS ABSTRACTS OF JAPAN,**
**vol. 9, no. 97 (P-352)[1820], 26 avril 1985; &**
**JP-A-59 221 849 (FUJITSU K.K.) 13-12-1984**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention se rapporte aux mémoires optiques destinées à l'emmagasinage de données dans des plages réservées de la surface d'un support d'information.

L'écriture et la lecture des données comporte l'éclairement du support d'information avec un spot lumineux produit par la focalisation précise d'un rayonnement incident. Des motifs de prégravure sont agencés dans la surface de référence du support d'information pour matérialiser des éléments de piste adjacents. Ceux-ci sont situés en dehors des plages réservées à l'inscription des données.

Chaque élément de piste est ainsi décomposé en sites alternés qui sont successivement explorés par le spot lumineux.

Lorsque le spot lumineux sert à la lecture des motifs de prégravure et du contenu des blocs de données, les conditions d'éclairement du support doivent être telles qu'un changement des caractéristiques optiques du support d'information ne puisse produire, tout en étant d'intensité suffisante pour donner naissance à des signaux détectés précis. Au contraire, au cours d'une phase de postgravure des données, l'énergie reçue par le support d'information est accrue pour réaliser l'inscription des données. Dans ce type de fonctionnement à deux niveaux d'intensité, le niveau haut est strictement limité aux plages de données, car il faut préserver de toute altération les motifs de prégravure. A cet effet, le dispositif d'enregistrement-lecture est muni d'un circuit de commande de la puissance du rayonnement incident qui tient compte de l'alternance des plages spécifiques occupées par les motifs de prégravure et des plages plus étendues réservées à l'emmagasinage des données.

L'exploitation d'une mémoire optique comporte nécessairement des phases d'écriture et de lecture, mais dans la plupart des cas d'utilisation, ces phases n'occupent qu'une faible proportion du temps de fonctionnement global. Ainsi, dans le cas d'une mémoire à disque optique, la rotation du disque est entretenue ainsi que les fonctions de focalisation, de synchronisation et de suivi de piste, même si aucun ordre d'écriture ou de lecture ne doit être exécuté. Cet état de veille assure une réaction rapide aux ordres reçus. La densité d'énergie de la partie éclairée du disque est notable lors de l'exploration des motifs de prégravure, car le spot doit lire ces motifs avec une grande précision. Il en va de même lors de la lecture et de l'écriture des données, mais l'on conçoit aisément qu'en état de veille, ou pour réaliser une autre fonction que l'écriture ou la lecture, on puisse modifier la densité de l'éclairement reçu par le support.

Les mémoires optique et notamment celles qui ont un fonctionnement réversible, n'échappent pas à la loi générale du vieillissement et il est bien connu que le vieillissement est accéléré par les contraintes de tous ordres. Il est également bien connu pour effacer une perturbation d'étendue donnée, les moyens d'effacement sélectif doivent agir dans un domaine débordant au moins légèrement la zone inscrite et sans reproduire les mêmes conditions qu'à l'écriture. Ce type de disque est décrit notamment dans la Demande de Brevet EP-A 106 673 qui concerne un disque effaçable fonctionnant selon trois modes, à savoir le mode lecture, le mode écriture et le mode effacement.

Compte tenu des indications qui précèdent et en laissant de côté l'écriture des données, on peut considérer comme un inconvénient de maintenir constantes les conditions d'éclairement d'un support d'information pendant le reste du temps de fonctionnement.

En vue de pallier cet inconvénient, la présente invention prévoit un mode d'éclairement commun du support d'information pour la lecture des données transcrites ou des motifs de prégravure intercalés entre les plates réservées à l'emmagasinage des données et prévoit de modifier ce mode d'éclairement au cours d'une phase d'exploration de ces plages qui n'est ni une phase d'écriture ni une phase de lecture.

L'invention a pour objet un système à mémoire optique à suivi de piste échantillonné pour support d'informations prégravé, le support comportant des plages prégravées ou plages intercalaires comportant une pluralité de motifs de prégravure définissant l'emplacement des éléments de piste et des informations d'adresse et des plages réservées alternant avec les plages intercalaires pour l'enregistrement des données utilisateur, le système comportant:

-- des moyens pour produire au moins un faisceau optique à niveau variable pour balayer les éléments de piste;

-- des moyens pour moduler le niveau du faisceau optique;

-- des moyens pour contrôler les moyens de modulation de manière à ajuster le niveau du faisceau optique de telle sorte que:

-- dans un mode de lecture, les plages intercalaires et les plages réservées sont balayées par un faisceau à un premier niveau suffisant pour permettre la lecture,

-- dans un mode d'écriture, dans lequel des données sont écrites dans les plages réservées, les plages réservées sont balayées par un faisceau à un niveau supérieur au premier niveau et les plages intercalaires sont balayées par un faisceau au premier niveau;

-- et des moyens d'échantillonnage tels que la focalisation et le suivi de piste ne sont effectués que sur les portions de signal photodétecté qui correspondent au contenu des plages intercalaires, caractérisé en ce que le niveau du faisceau optique est de plus ajuster de telle sorte que dans un mode veille, selon lequel des données ne sont ni lues, ni écrites dans les plages réservées, mais les motifs de prégravure sont suivis, les plages réservées sont balayées par un faisceau à un niveau réduit par rapport au premier niveau et les plages intercalaires sont balayées par un faisceau au premier niveau.

L'invention sera mieux comprise au moyen de la description qui va suivre et des figures annexées parmi lesquelles:

    – la figure 1 est une vue isométrique d'une mémoire optique de type connu,

    – la figure 2 est une vue isométrique d'un dispositif électrooptique permettant de modifier le mode d'éclairement d'un support d'information,

    – les figures 3 à 5 sont des figures explicatives,

    – la figure 6 représente les moyens électriques de commande d'une mémoire optique selon l'invention, et

    – la figure 7 est un schéma électrique d'une variante de réalisation des moyens électriques de commande représentés à la figure 6.

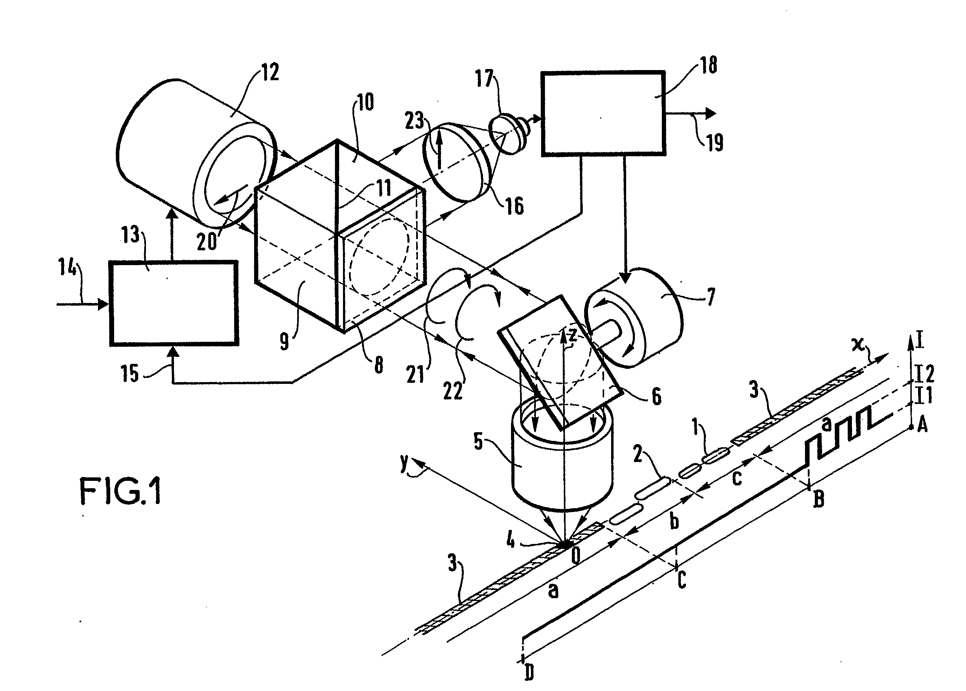

Sur la figure 1, on a représenté une portion de la surface d'un support d'information dans laquelle on a dessiné un tronçon d'élément de piste qui comporte des plages 3 réservées à la transcription de données selon des blocs de longueur a. Deux plages 3, sont séparées l'une de l'autre par une plage intercalaire comportant par exemple les motifs de prégravure 1 et 2. Les deux motifs 1 sont centrés sur l'axe x de l'élément de piste, tandis que les motifs 2 présentent des déports égaux et de signes contraires.

Les axes y et x définissent la surface du support d'information et l'axe z la direction normale d'incidence d'un rayonnement lumineux focalisé par l'objectif 5. L'élément de piste est exploré par le spot 4 lorsque le support d'information se déplace dans la direction positive de l'axe x. Le suivi de piste est assuré par un miroir de renvoi 6 dont le pivotement autour d'un axe parallèle à l'axe x est commandé par un moteur 7. L'éclairement du support d'information est produit par une source laser 12 qui émet par exemple un rayonnement collimaté à polarisation rectiligne de direction 20. Ce rayonnement traverse un cube séparateur de polarisation formé de deux prismes rectangles isocèles 9 et 10 accolés par leur grande face 11, celle-ci ayant reçu un traitement optique destiné à transmettre le rayonnement dont la polarisation 20 est dans le plan d'incidence et à réfléchir le rayonnement dont la polarisation 23 est perpendiculaire au plan d'incidence. Une lame quart d'onde 8 convertit la polarisation rectiligne 20 en polarisation circulaire 21. Après réflexion sur le support d'information et retour inverse via l'objectif 5 et le miroir 6, la lumière revient vers la lame quart d'onde 8 avec la polarisation circulaire 22 qui est de signe contraire puisque cette lumière progresse en sens contraire. Au sortir de la lame quart d'onde 8, la polarisation du rayonnement est telle qu'il se réfléchit à 45° sur la face traitée 11. La lentille collectrice 16 recueille ce rayonnement de polarisation 23 et l'applique à un ensemble photoélectrique 17 qui délivre un signal électrique rendant compte de l'interaction optique du spot 4 avec les motifs prégravés ou postgravés le long de l'élément de piste exploré. Le circuit de traitement électrique 18 reçoit le signal électrique provenant de l'ensemble photodétecteur 17. Il contient une horloge et des moyens de synchronisation permettant de définir des tranches de temps qui coincident avec l'exploration des plages a, b et c. La synchronisation est basée sur l'exploration des motifs 1 qui sont reconnus par un circuit d'identification approprié.

Les motifs 2 sont utilisés pour évaluer par échantillonnage les écarts du spot 4 par rapport à l'élément de piste, ce qui entraine une commande d'asservissement du moteur 7 visant à compenser ces écarts. Les motifs 2 ou d'autres zones du support d'information peuvent servir à déterminer l'erreur de focalisation du rayonnement qui est prise en compte par une boucle d'asservissement réagissant sur l'éloignement de l'objectif 5. La sortie 19 du circuit 18 fournit un signal électrique correspondant à la lecture des données écrites dans les plages 3. Toutes ces particularités sont abondamment décrites dans l'état de la technique.

On a représenté sur la figure 1 face à l'élément de piste un diagramme représentant l'intensité lumineuse incidente I à différentes étapes de l'exploration du support d'information. L'étape DC correspond à la lecture d'une plage de données 3. L'étape CB correspond à l'exploration d'une plage intercalaire comportant les motifs de prégravure 1 et 2. Au cours de cette étape et de l'étape qui la précède, le diagramme montre que l'intensité lumineuse est maintenue à un niveau bas $I_1$ suffisant pour lire le support, mais en deçà du seuil à partir duquel serait engendrée une modification des caractéristiques optiques du support d'information. L'étape BA est supposée être une étape au cours de laquelle des données 14 sont écrites. On voit sur le diagramme de la figure 1 que l'intensité lumineuse passe à un niveau supérieur $I_2$ pour laisser sur le support d'information la trace des bits "l" contenus dans les données. Ce niveau $I_2$ dépasse plus ou moins fortement le seuil de gravure mentionné ci-dessus. Ce passage au niveau d'écriture est obtenu avec le circuit de commande 13 qui module la source laser 12.

Une liaison est prévue entre le circuit 18 et le circuit 13 pour transmettre à l'entrée 15 un signal empêchant le passage au niveau $I_2$ lors de l'exploration des plages intercalaires b et c. Ainsi, on est assuré que la prégravure n'est pas affectée lors de l'écriture.

Dans les trois étapes illustrées à la figure 1, la loi de répartition de l'éclairement ne varie pas dans la surface de référence du support d'information et pour les étapes DC et CB l'énergie incidente est maintenue au même niveau $I_1$.

L'utilisation d'une mémoire optique comporte des tranches de temps où l'information est enregistrée ou reproduite, mais ces tranches peuvent être séparées par des périodes de veille où la seule fonction impérative est de lire les motifs de prégravure.

Dans ce cas, il est inutile d'explorer les plages de données 3 en conservant le même mode d'éclairement que pour l'exploration des motifs de prégravure. On peut donc envisager de modifier l'énergie lumineuse ou la répartition de l'éclairement pour soustraire les plages de données à l'action d'un rayonnement incident dont l'inoccuité à forte dose n'est pas démontrée. Dans le cas de mémoires optiques réversibles, cette mesure est une sage précaution, car elle permet d'obtenir une conservation plus durable de l'information emmagasinée.

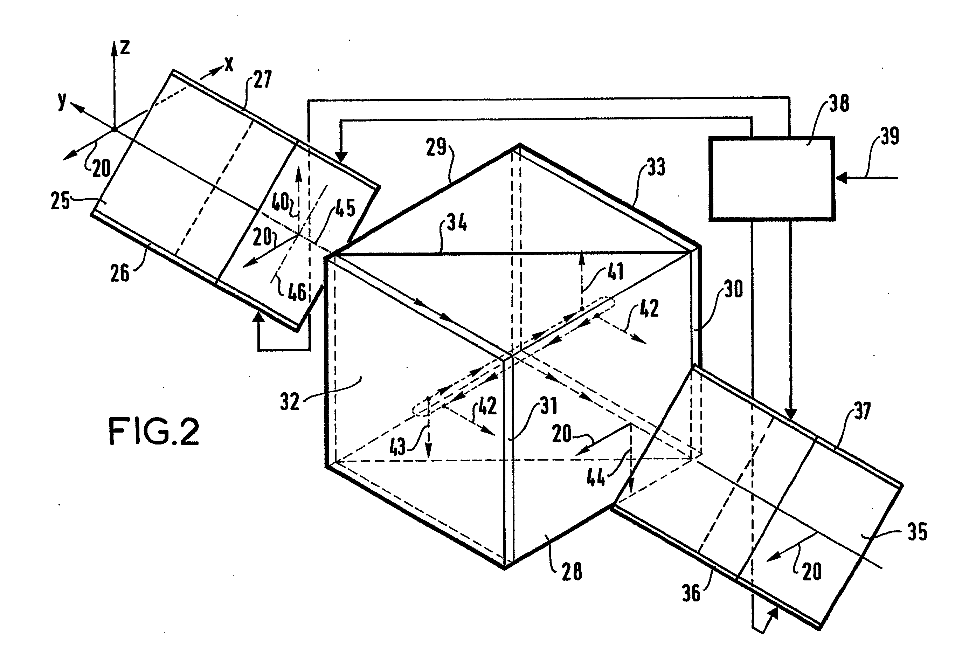

On peut voir sur la figure 2, donné à titre d'exemple non limitatif, un dispositif électrooptique permettant de modifier le mode d'éclairement du support d'information.

Ce dispositif est à intercaler entre la source laser 12 de la figure 1 et le cube séparateur 9-10.

Il comprend deux cellules électrooptiques composées de blocs 25 et 35 de matériau électriquement biréfringent tel que le niobate de lithium. Le bloc 25 est muni d'électrodes 26 et 27 de façon à y créer un champ électrique inducteur en réponse à une tension électrique de commande fournie par le circuit 38. Ce champ électrique est de direction parallèle à l'une des bissectrices de l'angle xoz. Le bloc 35 est équipé d'électrodes 37 et 36, afin de produire le même effet modulateur que l'ensemble 25, 26, 27 en réponse à une tension électrique de commande qui peut être la même que celle appliquée aux électrodes 26 et 27.

Les deux cellules électrooptiques présentent une biréfringence électrique telle que le franchissement par le rayonnement du bloc réfringent 25 ou 35 dans la direction z introduit un changement de polarisation égal à celui produit par la traversée d'une lame demi-onde dont les lignes neutres 45 et 46 sont orientées à 45° de la polarisation du rayonnement incident.

On voit sur la figure 2, un cube séparateur de polarisation comprenant deux prismes rectangles isocèles 28 et 29 accolés par leur grande face 34 , celle-ci ayant reçu un traitement assurant la transmission du rayonnement polarisé dans le plan d'incidence et la réflexion du rayonnement ayant la polarisaiton perpendiculaire. Les faces de prisme parallèles à la direction z de transmision du rayonnement sont munies de lames quart d'onde 30 et 31 dont les faces libres 32 et 33 sont provisoirement considérées comme rendues réfléchissantes.

Le cube séparateur complet qui vient d'être décrit est intercalé entre les deux cellules électrooptiques et compte tenu de ce qui a été dit ci-dessus, le rayonnement ayant la polarisation 20 traverse en ligne droite l'ensemble de la structure de la figure 2 en l'absence de tension électrique appliquée aux électrodes 26, 27 et 36, 37.

Par contre, le trajet de la lumière est modifié lorsque la tension délivrée par le circuit 38 provoque la commutation de polarisation à la sortie de la première cellule 25, 26, 27. En effet, le rayonnement incident sur la facette 34 présente la polarisation 40 à angle droit de la polarisation 20. Il est réfléchi vers la lame 30 avec la polarisation 41 et après un aller retour dans cette lame quart d'onde, il revient avec la polarisation 42 qui lui permet de traverser la facette 34. Le rayonnement aborde alors la lame 31 avec la polarisation 42 et après retour inverse, il revient vers la facette 34 avec la polarisation 43 qui assure sa réflexion en direction de la seconde cellule 35, 36, 37. Le rôle de la seconde cellule est de commuter la polarisation 44 pour retrouver la polarisation 20.

Le système optique de la figure 2 permet donc de choisir entre un trajet direct et un trajet replié.

Si les faces planes 32 et 33 des lames quart d'onde sont utilisées comme réflecteurs plans et si la facette 34 est plane les deux trajets sont éqivalents en ce qui concerne la forme et l'orientation des fronts d'ondes qui émergent de la structure.

Cependant les pouvoirs réflecteurs des faces peuvent différencier les trajets en intensité, ce qui représente une posssiblité d'utilisation pour faire varier le mode d'éclairement du support d'information, mais cette possibilité peut être obtenue de façon plus simple en agissant sur la source lumineuse, pour autant que celle-ci se prête à la modulation d'intensité rapide.

En dehors de cette première possibilité d'utilisation, l'intérêt de la disposition optique illustrée sur la figure 2 est que l'on peut influer sur la répartition de l'éclairement par une modification de forme ou d'orientation du front d'onde avec un temps de réaction extrèmement bref. Ainsi de nouvelles possibilités d'utilisation sont envisageables.

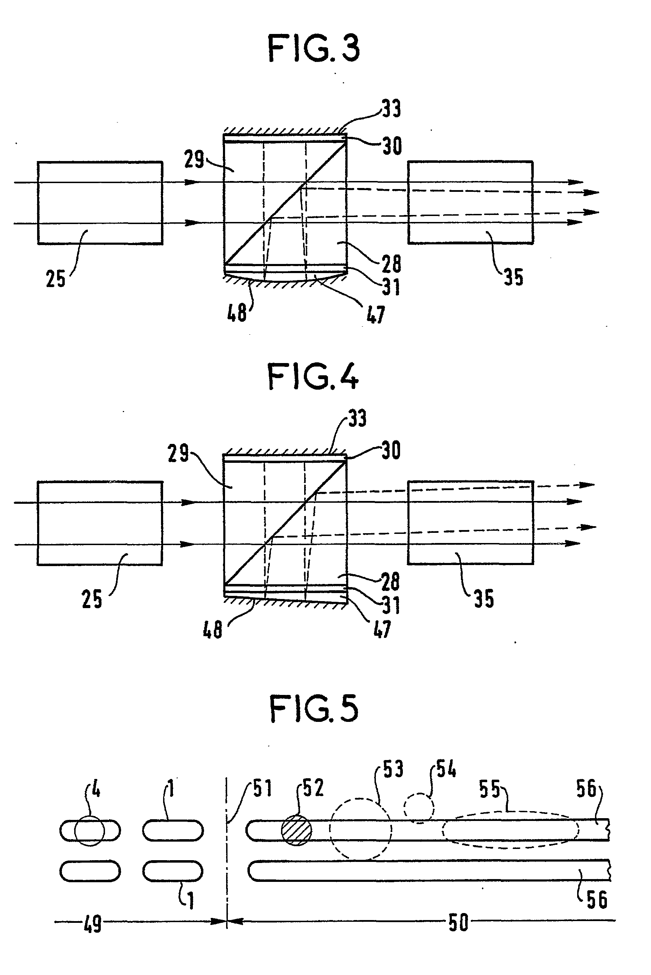

Comme illustré à la figure 3, on peut modifier les conditions de réflexion du côté de la lame 31 en accolant à celle-ci une lentille plan convexe 47 dont la face 48 est incurvée dans une direction au moins. Cette face 48 est rendue réfléchissante. On a représenté en trait plein un faisceau collimaté qui traverse la struoture sans rencontrer les faces 33 et 48 ; c'est ce qui se passe en l'absence de tension de commande aux bornes des cellules 25 et 35. Dans le cas contraire, on a représenté en pointillé la modification de la marche des rayons lumineux. Si la surface 48 est sphérique le faisceau émergent a une vergence modifiée qui défocalise par rapport au support d'information le faisceau projeté par l'objectif 5.

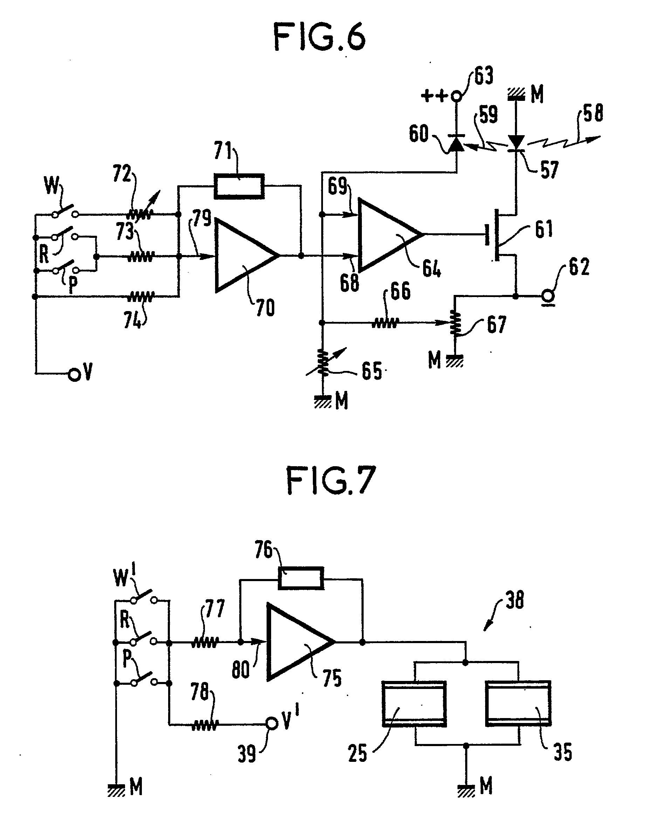

Ce changement est illustré à la figure 5 qui montre, vu de face, un fragment de support d'information et son éclairement.

Deux éléments de piste adjacents sont représentés avec à gauche de la ligne 51, dans la plage intercalaire 48, les motifs de prégravure 1 qui servent à les matérialiser et à droite, dans la plage réservée 50, des zones d'emmagasinage de données 56. Conformément à l'invention, le spot 4 est représenté dans la plage 49 avec une forme circulaire bien focalisé et disposant d'une intensité qui assure une bonne analyse des motifs de prégravure. Dans la plage 50 et dans la mesure où l'on n'effectue ni écriture, ni lecture de données, le mode d'éclairement a été modifié.

La référence 52 désigne l'éclairement par un spot dont on a sensiblement réduit l'intensité sans changer l'étendue.

La référence 53 désigne l'éclairement par un spot d'étendue accrue ; cet effet est obtenu avec un dispositif commutateur selon la figure 2, mais équipé d'une surface réflectrice 48 sphérique selon l'adaptation prévue à la figure 3.

La référence 55 illustre une autre variante de réalisation à spot oblong qui utilise aussi le commutateur de la figure 2 avec cette fois une surface réflectrice 48 à simple incurvation telle qu'un miroir cylindrique. Selon cette variante, on introduit un astigmatisme, utile notamment pour créer les conditions d'effacement des données inscrites.

L'invention n'est pas limitée aux exemples décrits. Il faut s'arranger pour que le changement de mode d'éclairement soit assez rapide au franchissement de la ligne séparatrice 51 et chaque fois qu'une commande d'écriture ou de lecture succède à une période de veille.

Sur la figure 4, on peut voir une variante de réalisation qui consiste à remplacer la lentille 47 de la figure 3 par un prisme. Cette variante n'influence pas la vergence du faisceau, mais le dévie légèrement, afin que le spot explore l'interpiste comme illustré avec la référence 54 à la figure 5.

La figure 6 est un schéma électrique qui permet de réaliser le changement du mode d'éclairement d'un support d'information selon la présente invention.

Pour éviter de compliquer inutilement ce schéma, on a représenté avec des interrupteurs W, R, P les commandes d'écriture et de lecture des données ainsi que la commande qui ordonne la lecture périodique des motifs de prégravure.

La fermeture de l'interrupteur W correspond à une demande externe d'écriture. La fermeture de l'interrupteur R correspond à une demande externe de lecture des données. La fermeture de l'interrupteur P a lieu périodiquement sous la commande du circuit 18 qui émet un signal situant avec précision l'exploration des motifs de prégravure.

Le rayonnement 58 qui éclaire le support d'information est produit par un module laser qui comprend une diode laser 57 et une photodiode 60 prélevant la fraction 59 du rayonnement émis. La diode laser 57 est montée en série avec un transistor à effet de champ 61 entre la masse M et la borne 62 d'une source de tension négative. La photodiode 60 relie la borne 63 d'une source de tension positive à l'entrée inverseuse 69 d'un amplificateur opérationnel 64 dont la sortie est reliée à l'électrode de commande du transistor 61.

Un potentiomètre 67 fournit une fraction de la tension négative d'alimentation à une résistance fixe 66 qui est reliée à l'entrée 69 avec une résistance réglable 65 assurant un retour à la masse M. L'entrée non-inverseuse 68 de l'amplificateur 64 reçoit une tension à plusieurs niveaux qui définit trois valeurs de la puissance optique rayonnée 58, par exemple : 0,125 mW, 1,25 mW et 10 mW. Cette tension est fournie par un amplificateur opérationnel 70 dont l'entrée 79 est bouclée sur la sortie par une impédance 71. Cette tension dépend des courants injectés à l'entrée 79 par trois résistances 72, 73 et 74.

La résistance 74 est directement reliée à la source de potentiel V et fixe le niveau d'émission le plus faible de la diode laser 57. Avantageusement ce niveau n'est pas nul, car il est utile que la contre réaction optique assurée par la photodiode 60 ne soit pas interrompue , sans quoi le rétablissement d'un fonctionnement normal de la diode laser comporterait un régime transitoire susceptible d'être gênant.

La fermeture de l'interrupteur W applique le potentiel V à la résistance 72 qui est réglée pour que l'émission 58 produise l'écriture des données avec le niveau d'intensité désiré. Sans les éléments R, P et 73, on est en présence d'un circuit de commande connu qui réalise la loi d'éclairement reproduite dans le diagramme de la figure 1. Selon une variante de réalisation de l'invention, la fermeture périodique de l'interrupteur P applique le potentiel V à la résistance 73, ce qui a pour effet de régler l'émission de lumière 58 à un niveau de lecture compris entre le niveau de veille ajusté par la résistance 74 et le niveau d'écriture ajusté par la résistance 72. Ainsi, on est assuré de disposer d'une puissance de lecture suffisante pour lire les motifs de prégravure.

L'interrupteur R est branché en parallèle avec l'interrupteur P pour assurer également cette puissance de lecture lorsqu'on lit effectivement des données, ce qui réalise au niveau de la lecture l'addition logique nécessaire à l'exploration des motifs de prégravure et des plages de données que l'on a interrogé sélectivement.

Selon une autre variante de réalisation qui est également illustrée à la figure 6, on peut faire appel à un circuit de commande 38 du conformateur de faisceau illustré aux figures 2 à 4. Quand ce circuit est utilisé, les interrupteurs R et P et la résistance 73 deviennent facultatifs, car il n'est pas indispensable de prévoir une commande d'intensité.

La commande des cellules électrooptiques 25 et 35 est assurée par un amplificateur opérationnel 75 capable de fournir une tension de sortie élevée avec un temps de montée court. L'entrée 80 de l'amplificateur est bouclée sur la sortie par une impédance 76. Une résistance 77 montée en série avec une résistance 78 relie l'entrée 80 à une source de potentiel 39 qui fournit une tension V' par rapport à la masse M. Le point commun aux résistances 77 et 78 est reliable à la masse par trois interrupteurs W', R et P qui sont branchés en parallèle. Si l'un au moins de ces interrupteurs est fermé, les cellules électrooptiques 25 et 35 sont hors tension, ce qui donne lieu à un éclairement très ponctuel et centré de l'élément de piste en cours d'exploration.

Si aucun des interrupteurs W', R ou P n'est fermé, les cellules électrooptiques commutent la polarisation de sorte que l'éclairement du support peut revêtir l'un des aspects 52, 53, 54 ou 55 illustrés à la figure 5.

Les interrupteurs R et P reliés à M sont de même espèce que les interrupteurs R et P reliés à V. Cependant, l'interrupteur W' diffère de l'interrupteur W car sa fermeture peut être maintenue pendant toute la durée d'un cylce d'écriture des données. Rappelons également que l'interrupteur W est impérativement ouvert à chaque exploration d'une plage intercalaire munie de motifs de prégravure, sauf lors d'une éventuelle première écriture de ces motifs et qu'il ne se ferme que pour transcrire les bits "I" de la suite des données.

L'utilisation d'une commande de faisceau permettant de changer les caractéristiques de convergence et de moduler l'intensité trouve une application intéressante dans le domaine des supports d'information permettant d'effacer les données grâce à un processus de transcription réversible. Il existe dans ce domaine des supports à couche magnétique dans lesquels le sens de l'aimantation d'un domaine permet de caractériser un bit 0 ou 1. L'écriture met en oeuvre une tête optique munie d'une bobine inductrice qui sélectionne le sens de l'aimantation dans un domaine défini par un échauffement transitoire qui résulte de l'impact d'un faisceau optique d'adressage. La lecture d'un domaine repose sur l'effet Faraday et consiste en une analyse fine de la rotation de polarisation de la lumière qui interagit avec le support d'information. L'effacement de l'information peut se comparer à l'écriture, mais il en diffère par le signe du champ magnétique à créer puisqu'il s'agit de ramener l'aimantation dans sa direction initiale et le cas échéant par une extension de la zone adressée optiquement.

Pour réaliser la fonction d'effacement; on peut par exemple fermer l'interrupteur W en maintenant ouvert l'interrupteur W' ce qui défocalise le spot pendant l'exploration des plages de données à effacer. La défocalisation sera par exemple celle illustrée par les contours 53 ou 55 de la figure 5.

Ce mode de fonctionnement concerne aussi les couches réversibles basées sur une interaction thermooptique produisant un changement de phase entre l'état amorphe et l'état cristallin. En effet, la cinétique du changement de phase exige que l'échauffement soit prolongé lorsqu'on désire effacer les données, ce qui conduit par exemple à allonger le spot dans la direction d'exploration de l'élément de piste. Dans ce cas, il peut être utile de tenir compte de cet allongement en prévoyant par exemple une marge en début et à la fin des plages de données.

L'invention n'est pas limitée à la création des conditions d'éclairement propices à un fonctionnment en état de veille. Elle comporte également la création de conditions d'éclairement permettant d'effacer des données préalablement inscrites. La modification des conditions d'éclairement peut se faire en utilisant les moyens électrooptiques décrits ci-dessus, mais elle pourrait tout aussi bien se fonder sur l'utilisation d'une cellule à modulation accousto optique ou sur l'utilisation en alternat des rayonnements produits par deux sources lumineuses modulables électriquement avec entre ces sources un dispositif optique de superposition transmettant ces rayonnements selon un axe optique commun.

## Revendications

1. Système à mémoire optique à suivi de piste échantillonné pour support d'informations prégravé, le support comportant des plages prégravées ou plages intercalaires comportant une pluralité de motifs de prégravure définissant l'emplacement des éléments de piste et des informations d'adresse et des plages réservées alternant avec les plages intercalaires pour l'enregistrement des données utilisateur, le système comportant:
  – des moyens pour produire au moins un faisceau optique à niveau variable pour balayer les éléments de piste;
  – des moyens pour moduler le niveau du faisceau optique;
  – des moyens pour contrôler les moyens de modulation de manière à ajuster le niveau du faisceau optique de telle sorte que:
    – dans un mode de lecture, les plages intercalaires et les plages réservées sont balayées par un faisceau à un premier niveau suffisant pour permettre la lecture,
    – dans un mode d'écriture, dans lequel des données sont écrites dans les plages réservées, les plages réservées sont balayées par un faisceau à un niveau supérieur au premier niveau et les plages intercalaires sont balayées par un faisceau au premier niveau;
  – et des moyens d'échantillonnage tels que la focalisation et le suivi de piste ne sont effectués que sur les portions de signal photodétecté qui correspondent au contenu (1, 2) des plages intercalaires, caractérisé en ce que le niveau du faisceau optique est de plus ajuster de telle sorte que dans un mode veille, selon lequel des données ne sont ni lues, ni écrites dans les plages réservées, mais les motifs de prégravure sont suivis, les plages réservées sont balayées par un faisceau à un niveau réduit par rapport au premier niveau et les plages intercalaires sont balayées par un faisceau au premier niveau.

2. Système selon la revendication 1, caractérisé en ce qu'il comporte de plus des moyens pour choisir à tout moment seulement l'un des modes parmi – a) le mode de lecture ou – b) un des autres modes.

3. Système selon la revendication 1, caractérisé en ce qu'il comporte de plus des moyens pour amener des modes autres que ledit mode de lecture à différer du mode de lecture en utilisant une distribution différente de l'énergie optique incidente sur la surface du support.

4. Système selon la revendication 3, caractérisé en ce que les moyens donnant une distribution différente de l'énergie comprennent un objectif de projection du faisceau d'éclairement et des moyens (R, P, 77, 78, 25, 35) pour modifier les fronts d'ondes des ondes optiques reçues par l'objectif de projection.

5. Système selon la revendication 4, caractérisé en ce que ledit objectif comporte un moyen pour projeter un spot lumineux (53, 55) ayant un contour dilaté dans au moins une direction de ladite surface par rapport au contour circulaire (4) du spot lumineux projeté en mode de lecture.

6. Système selon la revendication 5, caractérisé en ce que les moyens de projection produisent un contour dilaté (53) de forme circulaire.

7. Système selon la revendication 5, caractérisé en ce que les moyens pour dilater le contour comportent un moyen pour modifier l'astigmatisme du spot de telle sorte que le grand axe est orienté dans la direction d'exploration desdits éléments de piste.

8. Système selon la revendication 3, caractérisé en ce que les moyens pour modifier le mode lecture comportent des moyens pour déporter le spot projeté (54) par ledit objectif par rapport à l'élément de piste (56) en cours de balayage.

9. Système selon la revendication 1, caractérisé en ce que les moyens pour produire un faisceau optique comportent une source lumineuse (12) et un objectif de projection (5) entre lesquels est intercalé un dispositif électrooptique à commande électrique comportant un séparateur de polarisation (28, 29, 34) encadré par deux cellules électrooptiques (25, 35).

10. Système selon la revendication 9, caractérisé en ce que ledit séparateur de polarisation (28, 29, 34) est encadré par deux lames quart d'onde (30, 31) dont les faces (32, 33) extérieures sont munies de moyens réflecteur (47, 48) qui reçoivent le rayonnement polarisé provenant de ladite source seulement lorsque sa polarisation rectiligne a été tournée de 90° par l'une desdits cellules (25, 35).

11. Système selon la revendication 10, caractérisé en ce que l'un au moins desdits moyens réflecteurs (47, 48) modifie la divergence du faisceau incident dans au moins une direction.

12. Système selon la revendication 1, caractérisé en ce que ledit support d'information est du type réinscriptible plusieurs fois.

13. Système selon la revendication 1, caractérisé en ce que ledit support d'information n'autorise qu'une seule inscription définitive des données.

14. Système selon la revendication 1, caractérisé en ce que ledit support d'information est un disque comportant sur l'une au moins de ses faces une structure thermo inscriptible.

## Claims

1. An optical memory of the sampled tracking type for a preengraved information carrier, the carrier comprising pre-engraved areas or interposed areas including a plurality of pre-engraved patterns, which define the position of the track elements and of the address data, with the reserved areas alternating with the interposed areas for recording the user data, the system comprising:
- means for producing at least one optical beam of variable level for scanning the track elements,
- means for modulating the level of the optical beam,
- means for controlling the modulation means in such a way as to adjust the level of the optical beam such that
  - in the read mode, the interposed areas and the reserved areas are scanned by a beam having a first level sufficient to allow reading,
  - in the write mode, in which the data are written into the reserved areas, the reserved areas are scanned by a beam having a level exceding that of the first level, whereas the interposed areas are scanned by a beam having the first level,
- and means for sampling such that focussing and tracking is performed only on the portions of the photodetected signal which correspond to the contents (1, 2) of the interposed areas, characterized in that the level of the optical beam is adjusted in addition in such a way that in the standby mode, when the data are neither read from nor written into the reserved areas but the pre-engraved patterns are tracked, the reserved areas are scanned by a beam having a reduced level relative to the first level, whereas the reserved areas are scanned by a beam having the first level.

2. A system according to claim 1, characterized in that it comprises in addition means for selecting at any moment only one of the modes among - a) the read mode or - b) one of the other modes.

3. A system according to claim 1, characterized in that it comprises in addition means for making modes other than said read mode to differ from the read mode by using a different distribution of the optical energy striking the surface of the carrier.

4. A system according to claim 3, characterized in that the means providing a different energy distribution comprise a projection objective for the illuminating beam and means (R, P, 77, 78, 25, 35) for modifying the wavefronts of the optical waves received by the projection objective.

5. A system according to claim 4, characterized in that said objective comprises a means for projecting a light spot (53, 55) having a dilated contour into at least one direction of said surface in relation to the circular contour (4) of the light spot (4) projected in the read mode.

6. A system according to claim 5, characterized in that the projection means generate a dilated contour (53) of a circular shape.

7. A system according to claim 5, characterized in that the means for dilating the contour comprise a means for modifying the astigmatism of the spot, such that the long axis is oriented along the direction of scanning said track.

8. A system according to claim 3, characterized in that the means for modifying the read mode comprise means for displacing the spot (54) projected by said objective relative to the track element (56) which is being scanned.

9. A system according to claim 1, characterized in that the means for producing an optical beam comprise a light source (12) and a projection objective (5), between which an electrically controlled electrooptical device is inserted including a polarization separator (28, 29, 34) on either side of which is placed an electrooptical cell (25, 35),

10. A system according to claim 9, characterized in that said polarization separator (28, 29, 34) is framed by two quarter-wave plates (30, 31) whose external faces (32, 33) are provided with reflector means (47, 48), which receive the polarized radiation from said source only when its linear polarization has been rotated by 90° by one of said cells (25, 35).

11. A system according to claim 10, characterized in that at least one of said reflector means (47, 48) modifies the divergence of the incident beam in at least one direction.

12. A system according to claim 1, characterized in that said information carrier is of the type allowing to be reinscribed several times.

13. A system according to claim 1, characterized in that said information carrier allows for only one final inscription of data.

14. A system according to claim 1, characterized in that said information carrier is a disk including a structure allowing the thermal inscription on at least one of its faces.

## Patentansprüche

1. Optisches Speichersystem mit getasteter Spurverfolgung für einen vorgravierten Informationsträger, wobei der Träger vorgravierte Bereiche oder Zwischenbereiche mit einer Vielzahl von vorgravierten Motiven aufweist, die die Plazierung der Spurelemente und der Adreßinformation und die freigehaltenen Bereiche definieren, die mit den Zwischenbereichen zur Aufnahme der Benutzerdaten abwechseln, und wobei das System ausgestattet ist mit:
- Mitteln zur Erzeugung mindestens eines Lichtstrahls mit veränderlichem Pegel zum Abtasten der Spurelemente;
- Mitteln zur Modulation des Lichtstrahlpegels,
- Mitteln zur Steuerung der Modulationsmittel, derart, daß der Pegel des Lichtstrahls in der Weise eingestellt wird, daß:
- im Lesemodus die Zwischenbereiche und die freigehaltenen Bereiche durch einen Strahl mit einem ersten Pegel überstrichen werden, der für das Lesen ausreicht,
- im Schreibmodus, bei dem die Daten in die freigehaltenen Bereiche eingeschrieben werden, die freigehaltenen Bereiche durch einen Strahl mit höherem Pegel als dem ersten Pegel überstrichen werden, während die Zwischenbereiche durch einen Strahl mit dem ersten Pegel überstrichen werden,
- und Mitteln zur Abtastung, derart, daß die Fokussierung und die Spurverfolgung nur in denjenigen Abschnitten des fotoelektrisch erfaßten Signals erfolgt, die dem Inhalt (1, 2) der Zwischenbereiche entsprechen, dadurch gekennzeichnet, daß der Pegel zusätzlich derart eingestellt wird, daß im Wartemodus, bei dem die Daten in den freigehaltenen Bereichen weder gelesen noch eingeschrieben, aber die vorgravierten Motive verfolgt werden, die freigehaltenen Bereiche durch einen Strahl mit einem im Vergleich zum ersten Pegel herabgesetzten Pegel überstrichen werden, während die Zwischenbereiche durch einen Strahl mit dem ersten Pegel überstrichen werden.

2. System nach Anspruch 1, dadurch gekennzeichnet, daß es weiter Mittel aufweist, mit denen jederzeit nur einer der Modi auswählbar ist, nämlich a) der Lesemodus oder - b) einer der anderen Modi.

3. System, nach Anspruch 1, dadurch gekennzeichnet, daß es weiter Mittel aufweist, die bewirken, daß sich andere Modi als der Lesemodus durch Nutzung einer anderen Verteilung der auf die Oberfläche des Trägers auftreffenden Lichtenergie unterscheiden.

4. System nach Anspruch 3, dadurch gekennzeichnet, daß die Mittel zur Herbeiführung einer anderen Energieverteilung ein Projektionsobjektiv für den Beleuchtungsstrahl und Mittel (R, P, 77, 78, 25, 35) zur Veränderung der Wellenfront der vom Projektionsobjektiv empfangenen Lichtwellen aufweist.

5. System nach Anspruch 4, dadurch gekennzeichnet, daß das Objektiv ein Mittel zur Projektion eines Lichtpunkts (53, 55) aufweist, der eine gedehnte Kontur in mindestens einer Richtung der genannten Oberfläche im Vergleich zur kreisförmigen Kontur (4) des im Lesemodus projizierten Lichtpunkts besitzt.

6. System nach Anspruch 5, dadurch gekennzeichnet, daß die Projektionsmittel eine gedehnte kreisförmige Kontur (53) erzeugen.

7. System nach Anspruch 5, dadurch gekennzeichnet, daß die Mittel zur Dehnung der Kontur ein Mittel zur Veränderung des Astigmatismus des Lichtpunkts in der Weise aufweist, daß die große Achse in Abtastrichtung der Spurelemente fällt.

8. System nach Anspruch 3, dadurch gekennzeichnet, daß die Mittel zur Veränderung des Lesemodus Mittel zur Versetzung des vom Objektiv projizierten Lichtpunkts (54) relativ zum gerade überstrichenen Spurelement (56) aufweist.

9. System nach Anspruch 1, dadurch gekennzeichnet, daß die Mittel zur Erzeugung eines Lichtstrahls eine Lichtquelle (12) und ein Projektionsobjektiv (5) aufweisen, zwischen die eine elektrisch gesteuerte elektrooptische Vorrichtung mit einem Polarisationsseparator (28, 29, 34) eingefügt ist, welche von zwei elektrooptischen Zellen (25, 35) eingefaßt ist.

10. System nach Anspruch 9, dadurch gekennzeichnet, daß der Polarisationsseparator (28, 29, 34) von zwei Viertelwellenscheiben (30, 31) eingefaßt ist, deren Außenseiten (32, 33) mit Reflexionsmitteln (47, 48) versehen sind, die die von der Lichtquelle kommende polarisierte Strahlung nur dann empfangen, wenn deren Linearpolarisation durch eine der beiden Zellen (25, 35) um 90° gedreht worden ist.

11. System nach Anspruch 10, dadurch gekennzeichnet, daß mindestens eines der beiden Reflexionsmittel (47, 48) die Divergenz des in mindestens einer Richtung einfallenden Strahls verändert.

12. System nach Anspruch 1, dadurch gekennzeichnet, daß der Informationsträger vom Typ des wiederholt beschreibbaren Trägers ist.

13. System nach Anspruch 1, dadurch gekennzeichnet, daß der Informationsträger nur eine einmalige endgültige Beschreibung erlaubt.

14. System nach Anspruch 1, dadurch gekennzeichnet, daß der Informationsträger eine Scheibe ist, die auf mindestens einer ihrer Seiten eine thermisch beschreibbare Struktur aufweist.

FIG.1

FIG.2

EP 0 208 212 B1

# FIG.3

# FIG.4

# FIG.5

# FIG.6

# FIG.7